# EUROPÄISCHE PATENTANMELDUNG

(11) **EP 4 109 742 A1**
(43) Veröffentlichungstag der Anmeldung: **28.12.2022**
(21) Anmeldenummer: 22176179.4
(22) Anmeldetag: 30.05.2022
(51) Int. Cl.: H02S 20/22, H02S 30/10

(54) **UNTERKONSTRUKTION FÜR EIN SOLARMODUL, SOLARMODULSYSTEM DAMIT SOWIE VERFAHREN ZUM AUFBAUEN DER UNTERKONSTRUKTION UND DES SOLARMODULSYSTEMS**

(30) Priorität: 31.05.2021 DE 102021113996
(71) Anmelder: HS Holding GmbH, 26904 Börger (DE)
(72) Erfinder: Schmees, Hermann, 26904 Börger (DE)
(74) Vertreter: Jabbusch, Matthias

(57) **Zusammenfassung**

Die Erfindung betrifft eine Unterkonstruktion für ein Solarmodul, ein Solarsystem mit wenigstens einem Solarmodul und mit der Unterkonstruktion sowie ein Verfahren zum Aufbauen des Solarmoduls und ein Verfahren zum Aufbauen des Solarmodulsystems. Das Solarmodul weist einen Modulrahmen und eine Vielzahl von im Modulrahmen gehaltenen bifazialen Solarzellen auf. Die Unterkonstruktion weist ein Traggestell und am Traggestell angeordnete Halterungen für das Solarmodul auf. Erfindungswesentlich ist vorgesehen, dass die Unterkonstruktion einen zwischen den Rahmenhalterungen auf dem Traggestell montierten Reflektor aufweist. Der Reflektor kann auf einfache Weise vor der Montage des Solarmoduls auf dem Traggestell montiert werden und reflektiert Licht, welches auf den Reflektor fällt, auf die Rückseite der Solarzellen.

## Beschreibung

Die Erfindung betrifft eine Unterkonstruktion für ein Solarmodul nach dem Oberbegriff des Patentanspruchs 1 und ein Solarmodulsystem mit einem Solarmodul und mit einer Unterkonstruktion nach dem Oberbegriff des Patentanspruchs 9. Weiter betrifft die Erfindung ein Verfahren zum Aufbauen einer Unterkonstruktion nach dem Oberbegriff des Patentanspruchs 14 und ein Verfahren zum Aufbauen eines Solarmodulsystems nach dem Oberbegriff des Patentanspruchs 15.

Das Solarmodul weist einen Modulrahmen und eine Vielzahl von im Modulrahmen angeordneten bifazialen Solarzellen auf. Die Unterkonstruktion weist ein Traggestell und am Traggestell angeordnete Rahmenhalterungen auf. Mittels der Rahmenhalterungen kann das Solarmodul am Traggestell montiert werden. Das Solarmodulsystem weist ein derartiges Solarmodul und eine derartige Unterkonstruktion auf. Das Solarmodul ist hierbei mittels der Rahmenhalterungen auf dem Traggestell der Unterkonstruktion montiert. Bei den Verfahren zum Aufbauen einer Unterkonstruktion und zum Aufbauen des Solarmodulsystems werden Rahmenhalterungen an einem Traggestell angeordnet.

Es ist bekannt, eine derartige gattungsgemäße Unterkonstruktion beispielsweise auf einem Schrägdach zu montieren. Nach Montage der Unterkonstruktion wird auf der Unterkonstruktion ein Solarmodul mit bifazialen Solarzellen montiert und damit ein gattungsgemäßes Solarmodulsystem aufgebaut. Licht, welches an den Vorderseiten der Solarzellen vorbei auf das Dach trifft, wird teilweise auf die Rückseite des Solarmoduls zurückgestreut und dort für die Umwandlung in elektrische Energie nutzbar gemacht. Dadurch ist der Wirkungsgrad des Solarmoduls mit den bifazialen Solarzellen gegenüber einem Solarmodul, welches lediglich auf seine Vorderseite treffendes Licht nutzen kann, erhöht. Der Wirkungsgrad hängt dabei von der Albedo des Daches ab. Denn ein Dach mit einer hellen Dachhaut oder Dachfläche streut mehr Licht auf die Rückseite der Solarzellen zurück als ein Dach mit einer dunklen Dachhaut oder Dachfläche.

Aus JP 2001127331 A ist ein Solarmodul mit einem in den Rahmen des Solarmoduls integrierten Reflektor bekannt. Licht tritt hierbei gar nicht erst zur Rückseite des Solarmoduls aus, sondern wird am Reflektor auf die Rückseite von Solarzellen des Solarmoduls zurückgeworfen. Die Fertigung eines Solarmoduls mit integriertem Reflektor ist jedoch gemessen an seinem Nutzen in Bezug auf den dadurch ermöglichten zusätzlichen elektrischen Energieertrag vergleichsweise aufwändig und teuer.

Der Erfindung liegt die Aufgabe zugrunde, kostengünstig ein Solarmodulsystem bereitzustellen, welches unabhängig von der Farbe des Daches einen hohen Wirkungsgrad hat, und hierfür eine Unterkonstruktion, ein Solarmodulsystem, ein Verfahren zum Aufbauen einer Unterkonstruktion und ein Verfahren zum Aufbauen eines Solarmodulsystems anzugeben.

Die Erfindung löst diese Aufgabe mit einer Unterkonstruktion für ein Solarmodul nach dem Patentanspruch 1, mit einem Solarmodulsystem nach dem Patentanspruch 9, mit einem Verfahren zum Aufbauen einer Unterkonstruktion nah dem Patentanspruch 14 und mit einem Verfahren zum Aufbauen eines Solarmodulsystems nach dem Patentanspruch 15. Vorteilhafte Ausführungsformen der Erfindung sind in den Unteransprüchen angegeben.

Bei einer Unterkonstruktion für ein Solarmodul, welches einen Modulrahmen und eine Vielzahl von im Modulrahmen angeordneten bifazialen Solarzellen aufweist, mit einem Traggestell und mit am Traggestell angeordneten Rahmenhalterungen, mittels welchen das Solarmodul am Traggestell montierbar ist, ist erfindungswesentlich vorgesehen, dass die Unterkonstruktion einen zwischen den Rahmenhalterungen auf dem Traggestell montierten Reflektor aufweist.

Bei einem Solarmodulsystem mit wenigstens einem Solarmodul, welches einen Modulrahmen und eine Vielzahl von im Modulrahmen angeordneten bifazialen Solarzellen aufweist, und mit einer Unterkonstruktion, wobei die Unterkonstruktion ein Traggestell und am Traggestell angeordnete Rahmenhalterungen aufweist, mittels welchen das Solarmodul am Traggestell montiert ist, ist die Unterkonstruktion erfindungswesentlich gemäß der erfindungsgemäßen Unterkonstruktion ausgebildet.

Bei einem Verfahren zum Aufbauen einer Unterkonstruktion für ein Solarmodul, welches einen Modulrahmen und eine Vielzahl von im Modulrahmen angeordneten bifazialen Solarzellen aufweist, insbesondere auf einem Schrägdach, wobei Rahmenhalterungen, mittels welchen das Solarmodul an dem Traggestell montierbar ist, an diesem Traggestell angeordnet werden, ist erfindungswesentlich vorgesehen, dass ein Reflektor auf dem Traggestell montiert wird und damit die erfindungsgemäße Unterkonstruktion, wobei der Reflektor zwischen den Rahmenhalterungen auf dem Traggestell montiert ist, aufgebaut wird.

Bei einem Verfahren zum Aufbauen eines Solarmodulsystems, insbesondere auf einem Schrägdach, wobei eine Unterkonstruktion für ein Solarmodul, welches einen Modulrahmen und eine Vielzahl von im Modulrahmen angeordneten bifazialen Solarzellen aufweist, insbesondere auf einem Schrägdach, aufgebaut wird, wobei Rahmenhalterungen an einem Traggestell angeordnet werden, und wobei wenigstens ein Solarmodul, welches einen Modulrahmen und eine Vielzahl von im Modulrahmen angeordneten bifazialen Solarzellen aufweist, mittels der Rahmenhalterungen auf dem Traggestell montiert wird, ist erfindungswesentlich vorgesehen, dass ein Reflektor auf dem Traggestell montiert wird und damit das erfindungsgemäße Solarmodulsystem, wobei der Reflektor zwischen den Rahmenhalterungen auf dem Traggestell montiert ist, aufgebaut wird.

Die Erfindung nutzt ein herkömmliches bifaziales Solarmodul, welches auf herkömmliche Weise auf einem Traggestell getragen wird. Ein spezielles Solarmodul mit einem integrierten Reflektor ist also entbehrlich. Die Erfindung hat erkannt, dass zwischen den Solarzellen und dem Traggestell ausreichend Platz für die Montage eines Reflektors vorhanden ist. Weiter hat die Erfindung erkannt, dass hiernach zwischen dem Reflektor und den Solarzellen ausreichend Platz für eine Hinterlüftung der Solarzellen verbleibt. Die Hinterlüftung ist wichtig, damit sich die Solarzellen nicht unnötig erwärmen. Denn eine Erwärmung der Solarzellen würde den Wirkungsgrad der Solarzellen negativ beeinflussen. Die Erfindung hat schließlich erkannt, dass ein Luftaustausch aus dem Raum zwischen dem Reflektor und den Solarzellen mit der Umgebung weiterhin möglich ist, wenn die Unterkonstruktion zwischen den Rahmenhalterungen auf dem Traggestell montiert ist.

Der Reflektor kann auf einfache Weise vor der Montage des Solarmoduls auf dem Traggestell montiert werden und reflektiert Licht, welches auf den Reflektor fällt, auf die Rückseite der Solarzellen. Das Licht fäll vorzugsweise zwischen den Solarzellen hindurch auf den Reflektor. Alternativ oder zusätzlich fällt das Licht durch die Solarzellen hindurch auf den Reflektor. Die Solarzellen sind hierbei transparent oder semi-transparent ausgebildet. Alternativ oder zusätzlich fällt Licht seitlich am Solarmodul vorbei auf den Reflektor. Insbesondere sind beispielsweise mehrere Solarmodule nebeneinander angeordnet, wobei Zwischenräume zwischen den Solarmodulen verbleiben, durch die hindurch Licht schräg auf den Reflektor fallen kann. Die Solarmodule sind bei einer speziellen Ausführungsform der Erfindung schachbrettartig nebeneinander angeordnet, wobei zwischen den Solarmodulen Spalte in einer ersten, insbesondere horizontalen, Richtung und Spalte in einer senkrecht zur ersten Richtung angeordneten zweiten, insbesondere vertikalen, Richtung zwischen den Solarmodulen verbleiben. Die Unterkonstruktion ist hierbei entsprechend zur Aufnahme aller Solarmodule angepasst. Alternativ sind mehrere Unterkonstruktionen nebeneinander angeordnet.

Die Rahmenhalterungen weisen vorzugsweise Schrauben auf, mittels denen sie am Traggestell fixiert werden und zugleich das Solarmodul an den Rahmenhalterungen oder gegen das Traggestell festklemmen. Die Montage des Modulrahmens mittels der Rahmenhalterungen am Traggestell wird von der vorherigen Montage des Reflektors nicht beeinträchtigt. Insbesondere ergibt sich durch den Reflektor keine veränderte Position des Solarmoduls. Der Reflektor ist von der Vorderseite des montierten Solarmoduls aus betrachtet nicht sichtbar.

Bevorzugt weist das Traggestell wenigstens zwei parallel zueinander fixierte Querträger auf, an denen die Rahmenhalterungen angeordnet sind und an denen der Reflektor befestigt ist. Die Querträger können beispielsweise auf einem Dach, insbesondere Schrägdach, eines Hauses befestigt werden und ermöglichen einen Luftaustausch mit der Umgebung in der Ebene des Traggestells, also im Bereich zwischen dem Solarmodul und dem Dach, insbesondere parallel zur Anordnung der Querträger.

Die Rahmenhalterungen sind vorzugsweise paarweise an einander gegenüberliegenden Seiten des Reflektors seitlich neben dem Reflektor am Traggestell angeordnet. Insbesondere sind an jedem Querträger jeweils zwei Rahmenhalterungen angeordnet, zwischen denen der Reflektor am jeweiligen Querträger montiert ist.

Bei einer vorteilhaften Ausführungsform der Unterkonstruktion liegt der Reflektor direkt an den Querträgern an. Bei einer hierzu alternativen Ausführungsform ist vorgesehen, dass das Solarmodulsystem Abstandhalter, insbesondere in Form von Unterlegscheiben, aufweist, welche den Reflektor mindestens 2 mm und höchstens 20 mm, bevorzugt höchstens 10 mm, besonders bevorzugt höchstens 5 mm, von den Querträgern beabstandet halten.

Besonders bevorzugt ist vorgesehen, dass der Reflektor den Abstand zwischen den Querträgern selbsttragend überbrückt. Insbesondere ist der Reflektor eine Platte aus Metall oder Kunststoff. Der Reflektor weist an seiner Vorderseite vorzugsweise eine Beschichtung auf. Die Beschichtung weist insbesondere eine Albedo von mindestens 0,80, bevorzugt mindestens 0,85, auf. Damit wird ein hoher Anteil des zwischen den Solarzellen hindurch auf den Reflektor fallenden Lichts auf die Rückseite der Solarzellen reflektiert.

Der Reflektor ist bei einer vorteilhaften Ausführungsform der Unterkonstruktion mittels Schraubverbindungen am Traggestell befestigt. Insbesondere ist dabei vorgesehen, dass zur Herstellung der Schraubverbindungen der Reflektor Löcher für Schrauben aufweist und der Reflektor mittels durch die Löcher geführten Schrauben am Traggestell befestigt ist. Die Schraubverbindungen ermöglichen eine kostengünstige und robuste Montage des Reflektors. Die Schrauben sind beispielsweise Senkkopfschrauben. Der Reflektor kann auf einfache Weise auf die für das jeweilige Solarmodul benötigte Größe zurechtgeschnitten und an den benötigten Stellen mit den Löchern für die Schraubverbindungen versehen werden.

Alternativ zu den Schraubverbindungen sind bei einer alternativen Ausführungsform der Unterkonstruktion Klebeverbindungen für die Befestigung des Reflektors am Traggestell vorgesehen.

Das erfindungsgemäße Solarmodulsystem ist optional mit den Merkmalen wenigstens einer vorstehend beschriebenen Ausführungsform der Unterkonstruktion weitergebildet. Weiter ist besonders bevorzugt vorgesehen, dass die äußeren seitlichen Abmessungen des Reflektors kleiner sind als die inneren seitlichen Abmessungen des Modulrahmens an der Rückseite des Modulrahmens und dass der Reflektor innerhalb des Modulrahmens zwischen den Solarzellen und dem Traggestell angeordnet ist. Luft kann somit zwischen der Ebene des Traggestells und dem Bereich zwischen den Solarzellen und dem Reflektor zirkulieren.

Vorzugsweise sind Projektionen der Rückseite des Modulrahmens und des Reflektors in eine parallel zur Vorderseite des Solarmoduls angeordnete Projektionsebene an jeder Seite jeweils wenigstens 1,0 cm, bevorzugt mindestens 2,0 cm, besonders bevorzugt mindestens 3,0 cm, voneinander entfernt. Damit ist eine ausreichende Hinterlüftung der Solarzellen möglich.

Vorzugsweise sind dabei diese Projektionen an jeder Seite jeweils höchstens 10,0 cm, bevorzugt höchstens 7,0 cm, besonders bevorzugt höchstens 5,0 cm voneinander entfernt. Dadurch kann zugleich auf einer großen Fläche bis nahe an den Randbereich des Solarmoduls Licht mittels des Reflektors reflektiert werden.

Für eine ausreichende Hinterlüftung der Solarzellen ist weiter vorzugsweise vorgesehen, dass der Abstand zwischen den Solarzellen und der Oberseite des Reflektors mindestens 1,0 cm, bevorzugt mindestens 2,0 cm, besonders bevorzugt mindestens 2,5 cm, beträgt. Zugleich ist dabei vorzugsweise vorgesehen, dass der Abstand zwischen den Solarzellen und dem Reflektor höchstens 5,0 cm, bevorzugt höchstens 4,0 cm, besonders bevorzugt höchstens 3,5 cm, beträgt.

Das Verfahren zum Aufbauen einer Unterkonstruktion und das Verfahren zum Aufbauen eines Solarmodulsystems sind vorzugsweise mit Verfahrensschritten weitergebildet, die sich aus der Herstellung der erfindungsgemäßen Unterkonstruktion oder des erfindungsgemäßen Solarmodulsystems nach einer der vorstehend beschriebenen Ausführungsformen, insbesondere auf einem Dach eines Hauses, ergeben.

Weitere Ausführungsformen der Unterkonstruktion, des Solarmodulsystems und der erfindungsgemäßen Verfahren ergeben sich aus den Patentansprüchen, aus den beigefügten Zeichnungen und aus der nachfolgenden Beschreibung eines in den Zeichnungen dargestellten besonders bevorzugten Ausführungsbeispiels der Erfindung. In den Zeichnungen zeigen:
- Fig. 1:: eine Unterkonstruktion für ein Solarmodul gemäß einem Ausführungsbeispiel der Erfindung in einer perspektivischen Ansicht schräg von einer Seite;
- Fig. 2:: die Unterkonstruktion des Ausführungsbeispiels von Fig. 1 in einer perspektivischen Ansicht von oben;
- Fig. 3:: ein Solarmodulsystem bestehend aus der Unterkonstruktion des Ausführungsbeispiels von den Figuren 1 und 2 und einem Solarmodul mit bifazialen Solarzellen in einer perspektivischen Ansicht von oben; und
- Fig. 4:: das Solarmodulsystem von Fig. 3 in einer perspektivischen Ansicht schräg von unten.

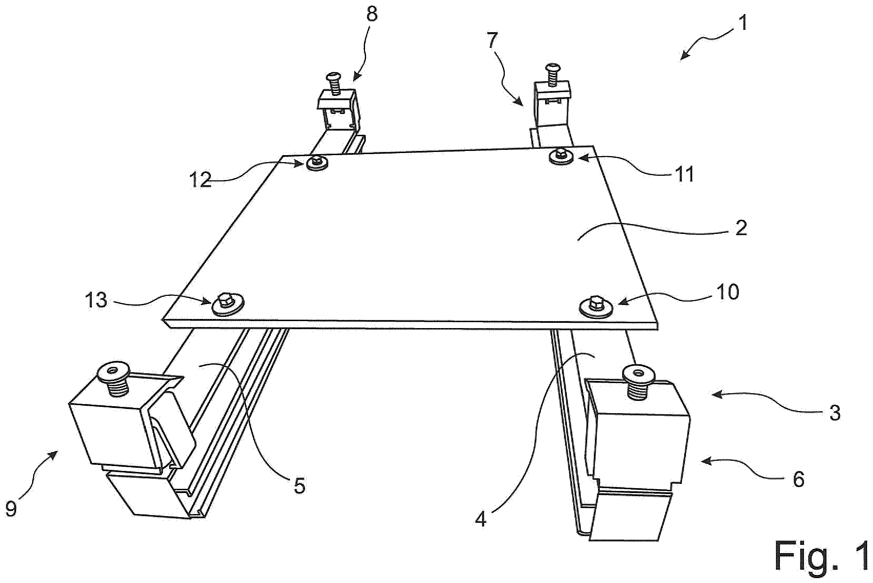

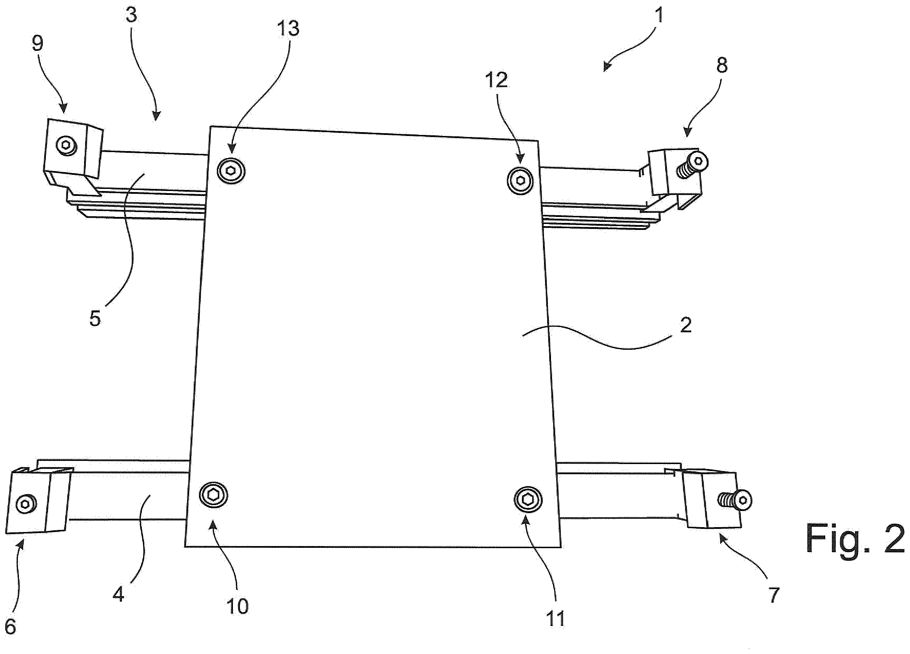

In den Figuren 1 und 2 ist eine erfindungsgemäße Unterkonstruktion 1 für ein Solarmodul dargestellt. Die Unterkonstruktion 1 weist erfindungsgemäß einen Reflektor 2 auf. Der Reflektor 2 ist dafür vorgesehen, Licht, welches seitlich an Solarzellen des Solarmoduls vorbei durch das Solarmodul hindurch auf den Reflektor 2 fällt, auf die Rückseite der Solarzellen zu reflektieren. Die Solarzellen sind als bifazialen Solarzellen ausgebildet und können daher auch das auf ihre Rückseite fallende Licht für die Umwandlung von Strahlungsenergie in elektrische Energie nutzen.

Die Abmessungen des Reflektors 2 sind geringer als die Abmessungen des Solarmoduls, welches auf der Unterkonstruktion 1 montiert werden kann. Zur besseren Veranschaulichung der Erfindung ist die Unterkonstruktion 1 in einer Ausbildung zur Aufnahme eines außergewöhnlich kompakten Solarmoduls mit dem entsprechend kleineren Reflektor 2 dargestellt. Die Erfindung ist jedoch mit entsprechend größeren Abmessungen der Unterkonstruktion 1 einschließlich des Reflektors 2 für die Aufnahme entsprechend größerer handelsüblicher Solarmodule geeignet. Beispielsweise ist die Unterkonstruktion 1 für die Aufnahme eines Solarmoduls geeignet, welches eine äußere Länge von 1,65 m und eine äußere Breite von 1,00 m an seiner Vorderseite aufweist und eine Öffnungslänge von 1,55 m und eine Öffnungsbreite von 0,90 m an seiner Rückseite aufweist. Der Reflektor 2 weist hierbei beispielsweise eine Länge von 1,45 m und eine Breite von 0,80 m auf. In jedem Fall ist die Länge des Reflektors 2 kleiner als die Öffnungslänge des Solarmoduls und ist die Breite des Reflektors 2 kleiner als die Öffnungsbreite des Solarmoduls.

Die Unterkonstruktion 1 weist ein Traggestell 3, bestehend aus einem ersten Querträger 4 und einem zweiten Querträger 5, auf. Die Querträger 4 und 5 sind insbesondere Strangpressprofile aus Aluminium. Die Unterkonstruktion 1 weist außerdem eine erste Rahmenhalterung 6, eine zweite Rahmenhalterung 7, eine dritte Rahmenhalterung 8 und eine vierte Rahmenhalterung 9 auf. Die Rahmenhalterungen 6 bis 9 sind identisch zueinander ausgebildet und vorzugsweise von handelsüblicher Bauart. Insbesondere besteht jede Rahmenhalterung 6 bis 9 jeweils aus mehreren gewinkelten Aluminiumprofilen, die teilweise formschlüssig in Nuten der Querträger 4 und 5 eingreifen und teilweise das zu befestigenden Solarmodul zu dessen Vorderseite umgreifen können, und einer Schraube, mittels welcher das Solarmodul zwischen der Rahmenhalterung 6 bis 9 und dem Traggestell 3 geklemmt werden kann. Die Rahmenhalterungen 6 und 7 sind dabei an einander gegenüberliegenden Enden des Querträgers 4 angeordnet. Die Rahmenhalterungen 8 und 9 sind an einander gegenüberliegenden Enden des Querträgers 5 angeordnet.

Der Reflektor 2 ist zwischen den Rahmenhalterungen 6 und 7 mittels einer ersten Schraubverbindung 10 und einer zweiten Schraubverbindung 11 am ersten Querträger 4 befestigt. Zwischen den Rahmenhalterungen 8 und 9 ist der Reflektor 2 mittels einer dritten Schraubverbindung 12 und einer vierten Schraubverbindung 13 am zweiten Querträger 5 befestigt. Die Schraubverbindungen 10 bis 13 sind identisch zueinander ausgebildet und bestehen jeweils aus einem in den Reflektor 2 eingebrachten Durchgangsloch, insbesondere Bohrloch, einem korrespondierend hierzu im jeweiligen Querträger 4 oder 5 angeordneten Sackloch, einer oberhalb des Reflektors 2 angeordneten Unterlegscheibe und einer Schraube, deren Kopf oberhalb der Unterlegscheibe angeordnet ist und die durch die Unterlegscheibe und das Durchgangsloch im Reflektor 2 hindurch in das Sackloch im Querträger 4 oder 5 eingreift. Eine gewindeartige Ausbildung des Querträgers 4 oder 5 am Rande des Sacklochs wird dabei bevorzugt beim Einschrauben der Schraube durch die Schraube selbst ausgebildet. Alternativ wird vor dem Einschrauben der Schraube ein Gewinde in das Sackloch im Querträger 4 oder 5 geschnitten.

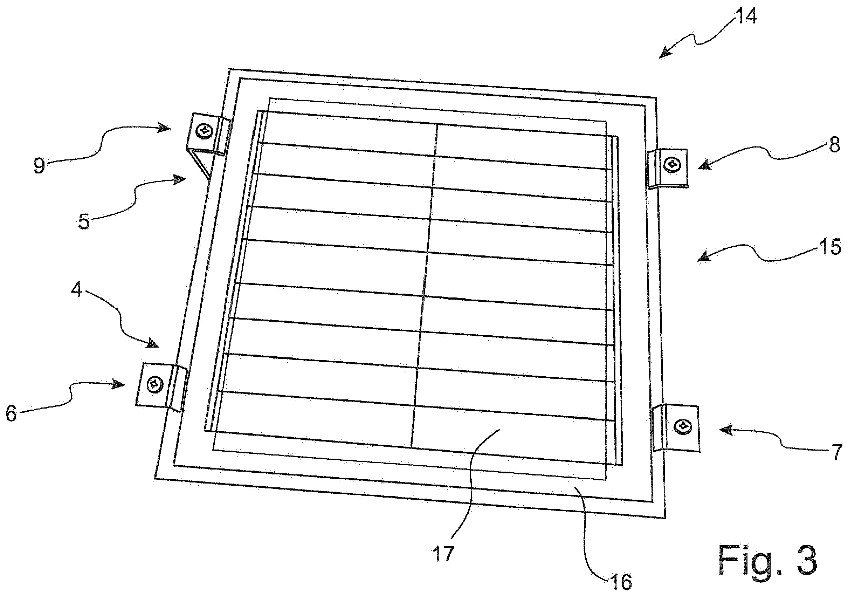

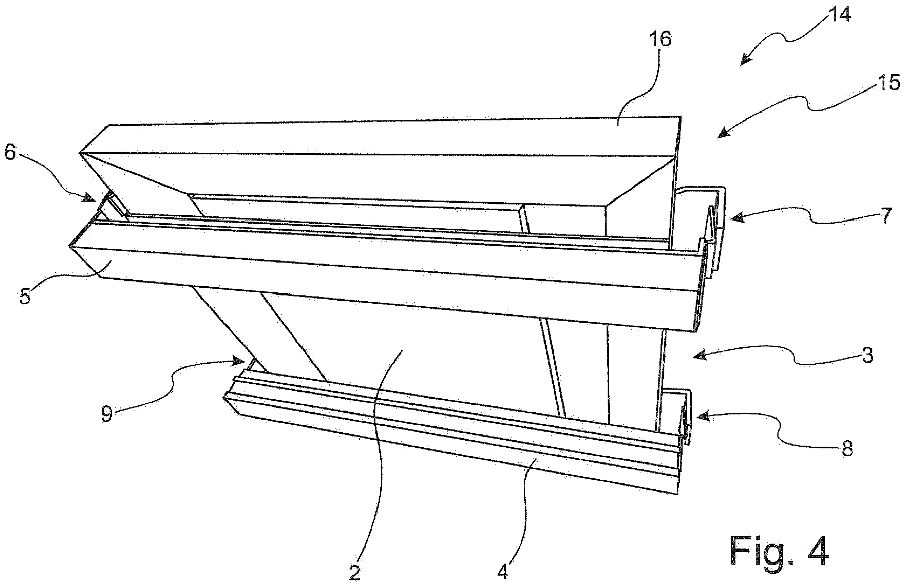

Fig. 3 und Fig. 4 zeigen ein Solarmodulsystem 14, bestehend aus der Unterkonstruktion 1 und dem bereits in der Beschreibung zu den Figuren 1 und 2 genannten und hier erstmals bezeichneten Solarmodul 15. Das Solarmodul 15 weist einen Modulrahmen 16 und eine Vielzahl von im Modulrahmen 16 aufgenommenen bifazialen Solarzellen 17 auf, von denen hier nur beispielhalft eine Solarzelle 17 bezeichnet ist. Die Rahmenhalterungen 6 bis 9 umgreifen den Modulrahmen 16 und klemmen somit das Solarmodul gegen das Traggestell 3. Zwischen den Solarzellen 17 und dem Reflektor 2 sowie rings um den Reflektor 2 zum Modulrahmen 16 verbleiben Spalte, so dass die Rückseite der Solarzellen 17 ist hinterlüftet ist, was einer Erwärmung der Solarzellen 17 und einem dadurch bedingten geringeren Wirkungsgrad entgegenwirkt.

Licht kann zwischen den Solarzellen 17 durch das Solarmodul 15 hindurch auf den Reflektor 2 fallen, von dessen heller Beschichtung zurück auf die Rückseite der Solarzellen 17 gestreut werden und einen Beitrag bei der Umwandlung von Strahlungsenergie in elektrische Energie durch das Solarmodul 15 leisten. Das Solarmodulsystem 14 kann dabei auf sehr einfache Weise kostengünstig und robust mit handelsüblichen Solarmodulen 15 mit bifazialen Solarzellen 17 aufgebaut werden. Ein hoher Wirkungsgrad wird somit ohne den Einsatz von Spezialmodulen mit integriertem Reflektor und unabhängig von der Albedo von Dachziegeln des Daches, auf dem das Solarmodulsystem 14 montiert wird, erreicht.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen beziehungsweise beanspruchten Merkmalskombinationen beschränkt, vielmehr sind alle im Rahmen der Erfindung sinnvollen Merkmalskombinationen als offenbart zu betrachten.

## Patentansprüche

1. Unterkonstruktion (1) für ein Solarmodul (15), welches einen Modulrahmen (16) und eine Vielzahl von im Modulrahmen (16) angeordneten bifazialen Solarzellen (17) aufweist, mit einem Traggestell (3) und mit am Traggestell (3) angeordneten Rahmenhalterungen (6, 7, 8, 9), mittels welchen das Solarmodul (15) am Traggestell (3) montierbar ist,
**dadurch gekennzeichnet,**
**dass** die Unterkonstruktion (1) einen zwischen den Rahmenhalterungen (6, 7, 8, 9) auf dem Traggestell (3) montierten Reflektor (2) aufweist.

2. Unterkonstruktion (1) nach Anspruch 1, **dadurch gekennzeichnet, dass** das Traggestell (3) wenigstens zwei parallel zueinander fixierte Querträger (4, 5) aufweist, an denen die Rahmenhalterungen (6, 7, 8, 9) angeordnet sind und an denen der Reflektor (2) befestigt ist.

3. Unterkonstruktion (1) nach Anspruch 2, **dadurch gekennzeichnet, dass** der Reflektor (2) direkt an den Querträgern (4, 5) anliegt oder dass die Unterkonstruktion (1) Abstandhalter, insbesondere in Form von Unterlegscheiben, aufweist, welche den Reflektor (2) mindestens 2 mm und höchstens 20 mm, bevorzugt höchstens 10 mm, besonders bevorzugt höchstens 5 mm, von den Querträgern (4, 5) beabstandet halten.

4. Unterkonstruktion (1) nach einem der Ansprüche 2 und 3, **dadurch gekennzeichnet, dass** der Reflektor (2) den Abstand zwischen den Querträgern (4, 5) selbsttragend überbrückt.

5. Unterkonstruktion (1) nach einem der vorhergehenden Ansprüche, **dadurch gekennzeichnet, dass** der Reflektor (2) eine Platte aus Metall oder Kunststoff ist.

6. Unterkonstruktion (1) nach einem der vorhergehenden Ansprüche, **dadurch gekennzeichnet, dass** der Reflektor (2) an seiner Vorderseite eine Beschichtung mit einer Albedo von mindestens 0,80, bevorzugt mindestens 0,85, aufweist.

7. Unterkonstruktion (1) nach einem der vorhergehenden Ansprüche, **dadurch gekennzeichnet, dass** der Reflektor (2) mittels Schraubverbindungen (10, 11, 12, 13) am Traggestell (3) befestigt ist.

8. Unterkonstruktion (1) nach Anspruch 7, **dadurch gekennzeichnet, dass** zur Herstellung der Schraubverbindungen (10, 11, 12, 13) der Reflektor (2) Löcher für Schrauben aufweist und der Reflektor (2) mittels durch die Löcher geführten Schrauben am Traggestell (3) befestigt ist.

9. Solarmodulsystem (14) mit wenigstens einem Solarmodul (15), welches einen Modulrahmen (16) und eine Vielzahl von im Modulrahmen (16) angeordneten bifazialen Solarzellen (17) aufweist, und mit einer Unterkonstruktion (1), wobei die Unterkonstruktion (1) ein Traggestell (3) und am Traggestell (3) angeordnete Rahmenhalterungen (6, 7, 8, 9) aufweist, mittels welchen das Solarmodul (15) am Traggestell (3) montiert ist,
**dadurch gekennzeichnet,**
**dass** die Unterkonstruktion (1) nach einem der vorherigen Ansprüche ausgebildet ist.

10. Solarmodulsystem (14) nach Anspruch 9, **dadurch gekennzeichnet, dass** die äußeren seitlichen Abmessungen des Reflektors (2) kleiner sind als die inneren seitlichen Abmessungen des Modulrahmens (16) an der Rückseite des Modulrahmens (16) und dass der Reflektor (2) innerhalb des Modulrahmens (16) zwischen den Solarzellen (17) und dem Traggestell (3) angeordnet ist.

11. Solarmodulsystem (14) nach Anspruch 10, **dadurch gekennzeichnet, dass** Projektionen der Rückseite des Modulrahmens (16) und des Reflektors (2) in eine parallel zur Vorderseite des Solarmoduls (15) angeordnete Projektionsebene an jeder Seite jeweils wenigstens 1,0 cm, bevorzugt mindestens 2,0 cm, besonders bevorzugt mindestens 3,0 cm, voneinander entfernt sind.

12. Solarmodulsystem (14) nach Anspruch 11, **dadurch gekennzeichnet, dass** diese Projektionen an jeder Seite jeweils höchstens 10,0 cm, bevorzugt höchstens 7,0 cm, besonders bevorzugt höchstens 5,0 cm voneinander entfernt sind.

13. Solarmodulsystem (14) nach einem der Ansprüche 10 bis 12, **dadurch gekennzeichnet, dass** der Abstand zwischen den Solarzellen (17) und dem Reflektor (2) mindestens 1,0 cm, bevorzugt mindestens 2,0 cm, besonders bevorzugt mindestens 2,5 cm, beträgt und dass der Abstand zwischen den Solarzellen (17) und dem Reflektor (2) höchstens 5,0 cm, bevorzugt höchstens 4,0 cm, besonders bevorzugt höchstens 3,5 cm, beträgt.

14. Verfahren zum Aufbauen einer Unterkonstruktion (1) für ein Solarmodul (15), welches einen Modulrahmen (16) und eine Vielzahl von im Modulrahmen (16) angeordneten bifazialen Solarzellen (17) aufweist, insbesondere auf einem Schrägdach, wobei Rahmenhalterungen (6, 7, 8, 9), mittels welchen das Solarmodul (15) an dem Traggestell (3) montierbar ist, an diesem Traggestell (3) angeordnet werden,
**dadurch gekennzeichnet,**
**dass** ein Reflektor (2) auf dem Traggestell (3) montiert wird und damit die Unterkonstruktion (1) nach einem der Ansprüche 1 bis 8, wobei der Reflektor (2) zwischen den Rahmenhalterungen (6, 7, 8, 9) auf dem Traggestell (3) montiert ist, aufgebaut wird.

15. Verfahren zum Aufbauen eines Solarmodulsystems (14), insbesondere auf einem Schrägdach, wobei eine Unterkonstruktion (1) für ein Solarmodul (15), welches einen Modulrahmen (16) und eine Vielzahl von im Modulrahmen (16) angeordneten bifazialen Solarzellen (17) aufweist, insbesondere auf einem Schrägdach, aufgebaut wird, wobei Rahmenhalterungen (6, 7, 8, 9) an einem Traggestell (3) angeordnet werden, und wobei wenigstens ein Solarmodul (15), welches einen Modulrahmen (16) und eine Vielzahl von im Modulrahmen (16) angeordneten bifazialen Solarzellen (17) aufweist, mittels der Rahmenhalterungen (6, 7, 8, 9) auf dem Traggestell (3) montiert wird,
**dadurch gekennzeichnet,**
**dass** ein Reflektor (2) auf dem Traggestell (3) montiert wird und damit das Solarmodulsystem (14) nach einem der Ansprüche 9 bis 13, wobei der Reflektor (2) zwischen den Rahmenhalterungen (6, 7, 8, 9) auf dem Traggestell (3) montiert ist, aufgebaut wird.
